# EUROPEAN PATENT APPLICATION

(11) **EP 4 397 582 A1**
(43) Date of publication of application: **10.07.2024**
(21) Application number: 23150692.4
(22) Date of filing: 09.01.2023
(51) Int. Cl.: B62K 5/10, B62K 7/04

(54) **TILTING CONTROL DEVICE AND VEHICLE COMPRISING THE SAME**

(71) Applicant: Shematic SA, 1228 Plan-les-Ouates (CH)
(72) Inventor: FLÜELI, Cédric, 1202 Genève (CH); GASPARI, Luca, 6926 Montagnola (CH); KILCHER, Lucio, 1090 La Croix (Lutry) (CH)
(74) Representative: Schneiter, Sorin

(57) **Abstract**

The present invention concerns a tilting control device and a vehicle, such as a tricycle, comprising the tilting control device. The vehicle comprises a front frame pivotally connected to a rear frame. The tilting control device preferably comprises first and second elasticity modules exerting torque with respect to a rotation axis of said front and rear frames. At a zero tilt angle or rest position of the vehicle, the two elasticity modules are in a pre-constrained state so as to exert torques in opposite directions that are different from zero and that preferably cancel out each other. In this manner, the invention avoids vibrations and absence of a torque response at lower tilting angles.

## Description

### Technical Field

The present invention generally relates to the field of wheeled vehicles, in particular bi- or tricycles, comprising tilting devices and to devices controlling tilt in the vehicles.

### Background Art and Problems Solved by the Invention

Tilting devices in three or more wheeled vehicles improve the vehicle handling by allowing the front portion to rotate along a longitudinal rotation axis relative to the rear portion. As a result, the tilting mechanism allows the driver to lean into curves when driving the vehicle, to drive faster in curves and/or to drive narrower curves. Generally, in curves, the tilting device also stabilizes the vehicle against centrifugal forces. On the other hand, a torque dampening mechanism is generally required in association with the rotation axle in order to prevent excessive tilting, and in order to stabilize the vehicle when it stands still.

FR3020335A1 discloses a tricycle comprising a tilting device, combined with an articulation enabling pivoting of the front and rear portions with respect to a transversal (left to right) axis. Furthermore, a suspension of the rear potion comprising the carrier frame is provided.

Another tilting control device is known from EP3904191A1. This publication discloses the use of a locking pin that mechanically blocks the tilting movement at low speeds. Such an approach has the advantage to keep the capability for the driver to lean into curves but requires the use of an additional mechanical system which increases the costs, the weight, and the complexity of the vehicle. A blocking mechanism is also disclosed in WO 2011/121211 A1.

US 6,104,154 discloses a tricycle comprising a tilting mechanism, here referred to as flexible trust bearing mechanism, with a rotating propelling shaft extending inside the flexible thrust bearing mechanism in order to propel the pedals of the tricycle.

The present inventors have observed that prior art tilting control devices suffer from inconveniences related to the properties of the dampening material and to general limitations of mechanical assemblies.

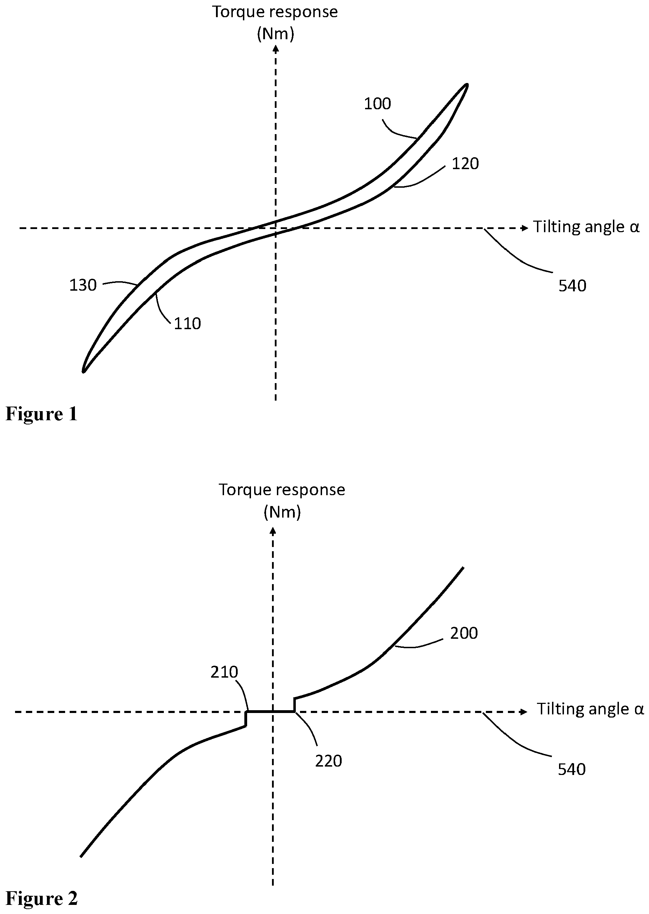

As illustrated in **Figure 1****,** showing torque in Nm as a function of the tilting (or torsion) angle α. When using a material having dampening properties, the phenomenon of hysteresis is observed with respect to the movement 100, 110 from the non-tilted, vertical position to the tilted position, during which the dampening material is charged or constrained, and the movement back 120, 130 to the vertical position, during which the dampening material is released. In Fig. 1, numerals 100 and 120 illustrate clockwise tilting and numerals 130, 110, counter-clockwise tilting. The hysteresis manifests itself by the occurrence of two separate curves for the charging and releasing movement, respectively. **Figure 2** illustrates an approximation of the curve resulting from the superposition of the curves in Fig. 1, thereby showing the resulting behaviour of the vehicle during use. At low torsion angles around zero, that is at the vertical position, there is no torque response in spite of tilting. In other words, there is no torque at low tilting angles, when starting the tilting movement from the vertical to a tilted position.

Furthermore, probably as a consequence of the above-described effects, the vehicle comprising the tilting mechanism exhibits vibrational and instable rotations when driving at zero or low tilting angles.

Furthermore, as a consequence of the above-described effects, the vehicle comprising the titling mechanism is not stabilized when it stands still.

The present invention addresses the problems above. Further objectives and problems addressed by the present invention will become apparent from the description of the aspects and embodiments of the invention herein below.

### Summary of the Invention

In a first aspect, the invention provides an angular rotation and/or tilting control device comprising: a connection assembly providing a pivotable connection between first and second portions and enabling rotation between said first portion relative to said second portion, or vice versa, with respect to a rotation axis, and first and second elasticity modules provided to exert a torque between said first and second portions depending on a rotational angle (α) of said first portion relative to said second portion.

In a second aspect, the invention provides a wheeled vehicle comprising the angular rotation and/or tilting control device of the first aspect of the invention.

In a third aspect, the invention provides a method for assembling a first frame part and a second frame part of a wheeled vehicle comprising a tilting device for enabling tilting of a first portions of the vehicle with respect to a second portion of the vehicle, wherein said tilting device comprises one, two or more elasticity modules, the method comprising rotationally connecting said first and second frame parts such that at least one of said and second elasticity modules is in a pre-constrained state with said first and second frame parts being connected.

In a preferred embodiment, the vehicle presents a zero tilting angle position at least when there is absence of tilting and/or when the first and second portions are in a configuration allowing the vehicle to advance along a straight line on a horizontal surface.

In a preferred embodiment, said first and second elasticity modules are both provided to exert a torque in opposite directions, the amount of torque being different from zero at said zero tilting angle position.

In a preferred embodiment, said first portion (or a front frame part) is rigidly connected with a first support element of the first elasticity module and said second portion (or a rear frame part) is rigidly connected with a second support element of the second elasticity module, wherein a first shaft section is rigidly connected to said first portion, and a second shaft section is rigidly connected to said second portion.

In another preferred embodiment, said second portion (or rear frame part) is rigidly connected with first and second support elements of said first and second elasticity modules, and wherein a shaft is rigidly connected to said first portion (or front frame part).

In a preferred embodiment, the elasticity module comprises a support element and a shaft or shaft section, wherein the support element comprises a bushing and said shaft or shaft section extends at least partially through said bushing.

In an embodiment of the method of the invention, each elasticity module comprises a shaft section, an elastic element and a support element, wherein each of said first and second frame parts is rigidly connected to either the shaft section or the support element of a given elasticity module, the method comprising engaging the shaft section, the support element and the elastic element of a first elasticity module, pre-constraining the elastic element of the first elasticity module, engaging the shaft section, the support element and the elastic element of the second elasticity module, and, optionally securing a rotational connection of said first and second frame parts.

Further aspects and preferred embodiments of the invention are defined herein below and in the appended claims. Further features and advantages of the invention will become apparent to the skilled person from the description of the preferred embodiments given below.

### Brief Description of the Drawings

**Figures 1** and **2** are graphs showing the torque response in Nm as a function of tilting angle in vehicles using prior art tilting devices and illustrates the problem of hysteresis associated with these devices.
**Figure 3** is a perspective view of a vehicle according to a first embodiment of the invention. Some parts are removed for reasons of illustration.
**Figure 4** is a front elevational view of a tricycle in accordance with an embodiment of the invention, the vehicle being in a tilted position.
**Figure 5** is a perspective view of an extract of Fig. 3, showing the tilting device in more detail, again with some parts removed.
**Figure 6** is a perspective and longitudinal section view of the parts shown in Fig. 5.
**Figure 7** is a cross sectional view of a elasticity module in accordance with the embodiment of Figs 4-6.
**Figure 8** is a perspective and longitudinal section view of the tilting device according to a second embodiment.
**Figures 9** and **10** are graphs showing the torque response in Nm as a function of tilting angle in vehicles using tilting devices in accordance with embodiments of the present invention.

Hereinafter, preferred embodiments of the device of the invention are described, with reference to the Figures, in order to illustrate the invention, without any intention to limit the scope of the present invention.

### Detailed Description of the Preferred Embodiments

The present invention relates to tilting control devices and to wheeled vehicles comprising the same.

For the purpose of the present specification, a "wheeled vehicle" is a vehicle capable of moving on a surface by way of wheels rotationally mounted to a frame, frame portion, or chassis of the vehicle, the wheels being in contact with the ground and displacement generally involving rotation of the wheels when on the ground. Preferably, the vehicle comprises, two, three or four wheels. Exemplary vehicles are bicycles, tricycles, mopets, motorbikes, and four-wheeled vehicles. In a preferred embodiment, the vehicle is a tricycle.

In an embodiment, the vehicle is motorized, preferably comprising one or more motor for propelling the vehicle, wherein "propelling" means to providing the mechanical energy resulting in or facilitating the displacement of the vehicle. In other embodiments, the vehicle is not motorized. In a preferred embodiment, the vehicle is an electrical vehicle, preferably comprising one or more electricity driven motors for propelling the vehicle. In other embodiments, the vehicle comprises, in addition or not to an electric propelling motor, one or more other motors for propelling the device, such as a combustion engine, an electrochemical motor, for example including a fuel cell, a nuclear reactor, just to mention exemplary motors.

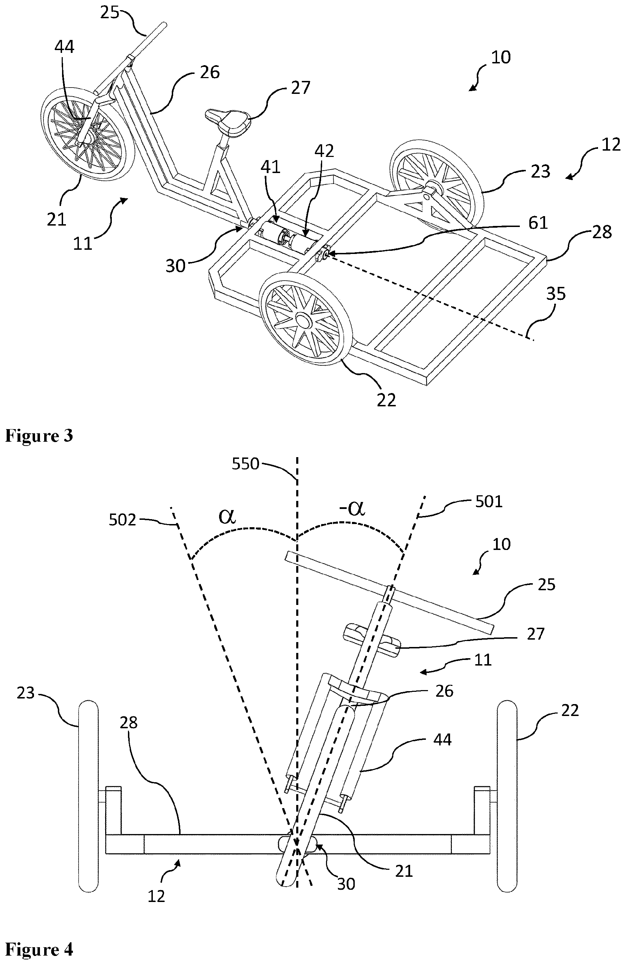

As illustrated with respect to **Figure 3****,** the vehicle 10 comprises, in accordance with a preferred embodiment, first and second portions 11, 12, each of said first and second portions comprising one or more wheels 21-23. The first portion is preferably a front portion and the second portion the rear portion, defined according the forward direction of advancement of the vehicle. A driver of the vehicle will generally be seated so as to face towards to the front direction when seated in the vehicle.

The first and second portions 11, 12 comprise front and rear frames or frame parts 26, 28, respectively. As is conventional, the frames preferably provide the function of carrying and/or supporting the weight of the vehicle and providing support for attaching other components of the vehicle, such as wheels, the driving fork and wheel, one or more seats, motors, gearings, casings, and so forth.

In the embodiment shown, the first portion 11 comprises a front frame part or front chassis part 26. In the embodiment, the first portion 11 also comprises a wheel 21 rotationally borne by the front frame part 26.

In the embodiment shown, the first portion 11 comprises one wheel 21 and the second portion comprises two wheels 22-23. Further as shown, the front wheel is rotationally borne by a guiding fork 24 which is in turn rigidly connected to a handle bar 25 or steering wheel, the fork and handle bar being pivotally connected to the front frame part 26. This is as such conventional for bicycles, motorbikes and tricycles. Furthermore, a saddle 27 or other type of seat is comprised in the first portion, preferably fixed on the front frame 26, for the driver of the vehicle.

In other embodiments, not shown, the vehicle may comprise two front wheels and one rear wheel, one front and one rear wheel, and optionally additional seats for passengers.

In the embodiment shown, the second portion 12 comprises a rear frame part or rear chassis part 28 and two wheels 22-23 rotationally borne by the rear frame portion. The vehicle preferably comprises a loading area, not shown, which is carried by (or suspended with respect to) the rear frame portion 28.

Many components and equipment generally present in wheeled vehicles, such as break systems, suspension systems, gear systems, crankset systems, pedals, bottom bracket, motors, illumination systems, casings, (car-bodies), are not shown in the figures, as such components may or not be present at the choice of the skilled person or manufacturer without impeding the scope of the present invention.

In an embodiment, the vehicle comprises a tilting control assembly and/or an angular rotation control device. The tilting control device may also be referred to more generally as tilting device. In a preferred embodiment, the tilting device comprises a connection assembly 30 and one, two or more elasticity modules.

Preferably, the vehicle comprises a connection assembly 30 providing a pivotable connection between said first and second portions and enabling tilting of said first portion relative to said second portion, or vice versa, with respect to a rotation axis 35. The rotational axis 35 extends preferably in the rear-to-front direction. It is preferably centred with respect to the lateral, left-to-right extension of the vehicle. In other embodiments, the rotational axis may be laterally displaced, or there may be several rotational axes, for example in vehicles comprising two front wheels. Furthermore, the rotational axis 35 may be skewed with respect to horizontal while still extending in the rear-to-front direction. Such skewed rotational axis have been known from the prior art (e.g. angle α in FR3020335A1 or US6,104,154). Preferably, rotational axis 35 extends in a vertical plane that extends in a rear-to-front direction. "Vertical" generally refers to a right angle with respect to the ground level on which the vehicle is provided.

In **Figure 4****,** plane 550 represents the plane in which the rotational axis 35 extends. In an embodiment, the vertical plane is a plane of symmetry of the vehicle, or at least of the frame, it being acknowledged that the vehicle may comprise a plurality of components that are not symmetrically mounted on the vehicle. One may therefore say that axis 35 extends in the plane that extends through the vehicle and that provides the highest possible level of symmetry for such a plane. In some embodiments, the rotational axis 35 is not extending in the plane of symmetry of the vehicle, while preferably still extending in the rear-to-front direction and/or in a vertical plane.

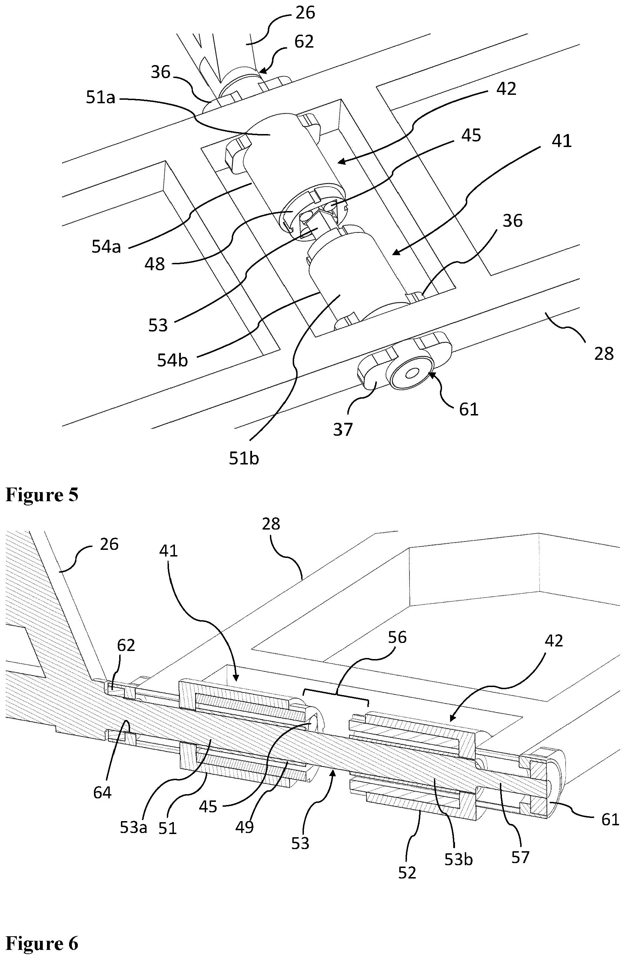

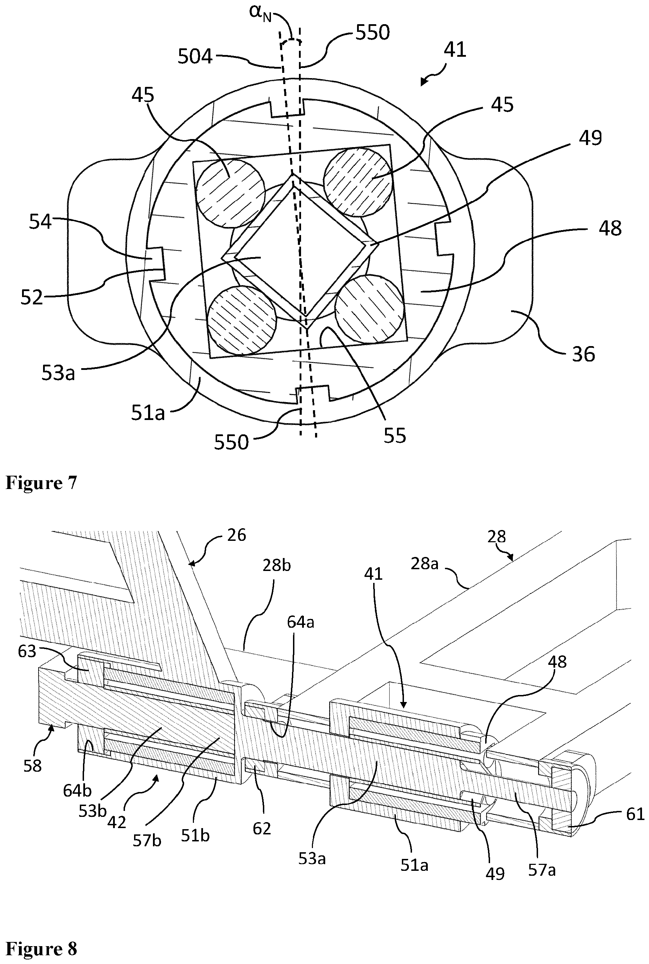

Turning back to Fig. 3, the connection assembly 30 may comprise any arrangement, device or mechanism suitable for rotationally connecting the first and second portions, preferably the front and rear frame parts 26 and 28. Typically, the connection assembly comprises one or more bearings, and preferably one or more thrust bearings, preferably one or more ball bearings 61-63 (Figs 6 and 8). The bearings preferably rotationally connect a frame element of the first portion to a frame element of the rear portion. "Frame element" in this context, encompasses any element that is rigidly connected to the frame or to a frame part 26, 28, and may also be part of other components, such as the connection assembly and/or the elasticity modules. Instead, or in addition to ball bearings, the connection assembly may comprise other rotational connectors or linkages, including sleeve bearings, sliding contact bearings, journal bearings, rolling contact bearings, tapered roller thrust bearings, in particular roller bearings (besides ball bearing). In the embodiment shown in Fig. 5, one part of the ball bearings 61, 62 comprises a flange 37 for facilitating rigid connection to rear frame part 28. As better visible in Fig. 6, a shaft 53 is rigidly connected to the inner, rotating part of the ball bearings 61, 62.

For the purpose of the present specification the term "rigidly connected" refers to two material components that are realized as a single, continuous piece, or two different and/or separate pieces that are connected with each other so as to behave as one single piece. For example, separate pieces may be rigidly connected by conventional techniques such as welding, soldering, melting, gluing, bolting, screwing, clamping, snap-connecting, and the like. A rigid connection in this sense preferably includes a connection that may be undone non-destructively.

In a preferred embodiment, the vehicle comprises one or more, preferably two or more elasticity modules 41, 42. It is noted that other terms may be used. For example, the terms "flexible thrust bearing", "torque absorber", "torque dampening system", "flexibility system" and "torsion spring" may be used to define the functionality of this unit and preferably one or more of these terms are encompassed by and may be used instead of "elasticity module".

Preferably, each of said elasticity modules 41, 42 is provided to be able to exert a torque between said first and second portions, preferably between frame parts 26 and 28. The torque is preferably exerted with respect to said rotational axis 35.

In a preferred embodiment, the extent or value (e.g. in Nm) of the torque exerted by an elasticity module depends on the tilting angle (±α) of said first portion relative to said second portion. The concept of the tilting angle is known in the art (e.g. Fig. 2 of FR3020335), and is also illustrated in Fig. 4. The tilting angle is determined with respect to vertical 550 and, for the purpose of the present specification, a positive value for α (+α) is defined as tilting clockwise (towards the right from the viewpoint of the driver), and tilting of the vehicle counter-clockwise (to the left from the viewpoint of the driver, as illustrated in Fig. 4) results in a negative value for α (-α). The tilting angle preferably corresponds to the rotation of the first portion relative to said second portion around axis 35.

Tilting of the vehicle is generally induced by the driver of the vehicle, for example by skewing the driver's actively towards the left or right side of the vehicle, corresponding to the leaning into the turns by the driver. The invention also envisages automatically induced tilting, for example in electronically controlled vehicles comprising suitable motors or actuators under electronic control to induce tilting.

The vehicle can assume a zero tilting angle position, where α=0. In this position, there is thus absence of tilting. Preferably, in this position, the first and second portions 11, 12 are in a configuration allowing the vehicle to advance along a straight line on a horizontal surface. In a preferred embodiment, the zero tilting angle position coincides with the rest position of the vehicle, that is the position of the vehicle when there is no external force acting on the vehicle. It is noted however, that the rest position, defined by net absence of torque, may in principle also be different from the zero tilting angle position, or may be slightly different from the zero tilting angle position.

The zero tilting angle position can also be defined as the position where the first portion 11, and more particularly front frame part 26, is vertically oriented. In the embodiment shown in the figures, the vertical orientation is obtained when the frame part 26 extends in the vertical rear-to-front plane 550. To the extent that the vehicle is symmetric, the zero tilting angle position may also mean that the vehicle is in the configuration that is the most symmetric configuration it can assume. In the figures, Fig. 3 corresponds to a zero tilting angle position and Fig. 4 represents a non-zero tilting angle position, where the tilting angle α has a positive value. In this case, the tilting angle is about 25°.

Typically, the vehicle is configured so as to allow tilting angles α of 0 to ±90°. In reality, a ±90° is not obtained, and the vehicle may (but need not) be constructionally limited to lower absolute amounts of tilting angles, such as ±60°, preferably ±45°, more preferably ±30°. In vehicles of the type as shown, larger tilting angles result in an increased risk of the driver falling from the vehicle.

As mentioned above, the extent of the torque exerted by an elasticity module preferably depends on the tilting angle α. If there are two or more elasticity modules, each elasticity module may exert a torque independently from the other elasticity module. More specifically, the torque exerted by an elasticity module 41 at a particular tilting angle may be different from the torque exerted by another elasticity module 42 at a given tilting angle.

In a preferred embodiment, the vehicle comprises two elasticity modules that are provided to exert a torque in opposite rotational directions.

In a preferred embodiment, said first elasticity module 41 is configured to exert a first torque in a first rotational direction (+) and said second elasticity module 42 is configured to exert a second torque in a second rotational direction (-) that is opposed to said first rotational direction (+). This applies preferably at least with respect to an angular tilting range, and more preferably, this applies to the zero tilting angle position of the vehicle.

For illustrating this point by way of an example, the first elasticity module 41 may exert a positive torque in a first direction at an arbitrary tilting angle α₁ encompassed by the range of α = 0 to α_{N2} (the value of α_{N2} is defined below). This torque of the first elasticity module may oppose and/or dampen the tilting movement as induced by the driver, as is conventional. At the same time, at the tilting angles of 0 and up to (but not including) α_{N2}, for example at the selected tilting angle α₁, the second elasticity module 42 may exert a torque tending the tilting into the opposite direction and thus *supporting* or favoring the tilting movement induced by the driver.

In a preferred embodiment, said first and second elasticity modules 41, 42 present, independently, a neutral angular position (α_{N1}, α_{N2}) between said first and second portions when they do not exert any torque.

The value α_{N} is specific to each elasticity module and represents the angular position where the elasticity module is in a neutral position, that is, the tilting angle α around axis 35 where the particular elasticity module does not exert any torque. α_{N1} is the neutral position of the first elasticity module 41, and α_{N2} the neutral position of the second elasticity module 42. At this position, the constraint on the elastic element of the respective elasticity module is preferably zero or at least at a minimum. If there are more than two elasticity modules, yet another α_{N} value may apply (α_{N3} α_{N4}, etc). In the α_{N} angular position, the elasticity module and in particular the elastic element 45 of the corresponding elasticity module is generally not subjected to physical constraint and is thus unconstrained.

In an embodiment, α_{N1} and α_{N2} of said first and second elasticity modules is, independently, an angle α in the range of ≠0 (that is >0 or <0) and up to ±90°, preferably ±60°. In an embodiment, |α_{N1} and α_{N2} are, independently, in the range of ± 0.5° to 89°, preferably ±1° to 60°.

Further exemplary values for α_{N} for the first elasticity module (α_{N1}) may be 20°, 15°, 10°, 7°, 5° 3°, 2°, or, in practice, any non-round value in between two of these values. The same α_{N} values apply to the second elasticity module with opposite sign (α_{N2}).

Turning back to the example above, it was indicated that the first and second elasticity modules 41, 42 preferably exert torque in opposite directions. At α_{N2}, the second elasticity module exerts a torque of zero, and has thus entirely stopped supporting the tilting movement induced by the driver, and the first elasticity module still opposes or dampens the tilting movement induced by the driver.

In an embodiment, one or both of said elasticity modules are provided to exert a torque that is different from zero when the vehicle is in a zero tilting angle position. In other words, in said zero tilting angle position, at least one elasticity module is provided so as to tend the first portion in a rotational direction towards tilting. Referring to α_{N}, this means that arri and/or α_{N2} ≠ 0.

This condition means that the first and/or the second elasticity modules is/are pre-constraint in said zero tilting angle position.

It is noted here that this is different from the situation of prior art vehicles illustrated in Fig. 2, where there is absence of constraint at the rest position.

In a preferred embodiment, said first and second torques exerted by said first and second elasticity modules substantially cancel out each other at said zero tilting angle position. At the zero tilting angle position, there is preferably no torque exerted between the first and second portions 11, 12. This applies preferably even though the first and second elasticity modules do, independently, exert torque, but in opposite directions and at the same absolute value. In other words, said first and second elasticity modules preferably stabilize the rest position. In mathematical terms, |α_{N1} = |α_{N2}|(or α_{N1} = -α_{N2}).

The elasticity modules preferably exert torque with the aid of an elastic element 45. The elastic element 45 preferably exhibits one or more selected from elasticity, dampening and/or resiliency. The term "elastic element" is used herein for reasons of simplicity, without intending to exclude the properties, such as dampening and/or resiliency, that the elastic element may possess in addition or as an alternative to elasticity.

In each of the one, two or more elasticity module, the elastic element is preferably provided, independently from the elastic element in another elasticity module, to either (i) oppose tilting, (ii) promote tilting, or (iii) being neutral with respect to tilting between said first and second portions, depending on a tilting angle (±α).

It is noted that the elastic element provides the torque response to the elasticity module. With respect to embodiments where the elasticity module is in a pre-constrained state, this is generally the consequence of the elastic element being in a physically constraint state.

In a preferred embodiment, said elastic element 45 comprises a material selected from natural rubber and polymers such as synthetic rubber. In other embodiments, the elastic element may comprise one or more springs, such as one or more torsion springs, rotational springs and/or helical springs. The elastic element may comprise several elastic components, selected independently from rubber components and springs. In a preferred embodiment, the elastic element 45 comprises one or more rubber components, preferably rubber rods.

The first and second elasticity modules 41, 42 are now described with reference to the embodiment shown in **Figures 5, 6** and **7****,** without intention to limit the invention to this particular form of realisation.

In a preferred embodiment, each of said first and second elasticity modules 41, 42 comprises a shaft 53 or shaft section 53a, 53b and the elastic element 45 provided to exert force on said shaft or shaft section upon physical constraint experienced by said elastic element 45. Preferably, the elastic element and the shaft are provided such that said physical constraint results in torque between said first and second portions (or front and rear frames or frame parts 26, 28), exerted by the elasticity module.

In the embodiment shown in Fig. 6, a single shaft 53 with two shaft sections 53a and 53b is shown. The two shaft sections may be provided as sections one succeeding the other along the longitudinal extension of the shaft. The shaft sections may be part of a single shaft 53.

Preferably, the shaft sections occupy different longitudinal sections along a shaft extending in the rear-to-front direction. The shaft section may be spaced apart, adjacent or even overlapping. In a preferred embodiment, said shaft 53 and/or shaft sections 53a, 53b is/are coaxial and/or have an axis that coincides with rotational axis 35. Preferably, shaft 53 and/or shaft section 53a, 53b are configured to rotate about axis 35. In the embodiment shown, shaft 53 is rigidly connected, for example in one piece, with the front frame part 26.

The shaft 53 is preferably rotationally connected by way of bearings 61 and 62 to the rear frame part 28. In the embodiment shown, bearings 61, 62 are ball bearings. The construction of the bearings being as is conventional they are not shown in greater detail. It is just noted that the bearings also comprise fasteners for axially fixing the shaft to the bearings, so as to prevent the shaft from axially displacing from the bearings and/or from separating from the rear frame part. The shaft or shaft sections are preferably fixed with respect to the bearings once the shaft and support elements are placed in a position corresponding to the definitive relative position, that position preferably being the rest position of the vehicle.

In a preferred embodiment, each of said first and second elasticity modules 41, 42 further comprises a support element 51a, 51b.

In a preferred embodiment, also shown in the figures, each support element 51a, 51b, comprises a bushing preferably in the form of a tubular element. Preferably, the shaft or shaft section 53, 53a, 53b is mounted pivotally with respect to said support element. For example, as shown in the figures, the shaft or a shaft section extends at least partially through said bushing. Preferably, said shaft and said bushing extend coaxially. In the embodiments shown in Figs 5 and 6, the support elements 51a and 51b of the first and second elasticity assemblies, respectively, are both rigidly connected to the rear frame part 28.

It is noted here that the bushings 51a, 51b may be provided in the form of one continuous bushing or tube, which in Figs 3, 5 and 6 are shown as being interrupted for the reason of improving illustration.

In Fig. 5, support elements 51a, 51b comprise flanges 37, by which they may be rigidly connected to the rear frame 28, for example by screwing or welding. The support elements may also be rigidly connected in other ways, for example without flanges, to the rear frame part.

In a preferred embodiment, the elastic element 45 of a given elasticity module is provided to be able to be subjected to constraint upon rotation of said shaft (or shaft section) with respect to the respective support element. The torque exerted by the elasticity module preferably depends on an angular position between the support element 51a of the corresponding elasticity module and said shaft (or shaft section) 53a associated with said shaft or shaft section. The angular position is preferably with respect to the axis of said shaft, preferably axis 35. In Fig. 6, the support element 51a of the first elasticity module 41 is associated with shaft section 53a and the support element 51b of the second elasticity module 42 is associated with shaft section 53b. Shaft section 53a may also be the first shaft section and shaft section 53b may be the second shaft section. The shaft sections 53a, 53b being sections of a continuous, e.g. one-piece shaft 53, they are in particular defined by the section of shaft 53 that is under the effect of the elastic element 45 of the respective elasticity module 41 or 42.

In a preferred embodiment, said elastic element 45 is provided with respect to said support element 51a, 51b such that a physical constraint, preferably in the form of deformation of said elastic element 45, results in the generation of torque between said support element and said shaft.

It has been noted above that the two support elements in Figs 5-6 are rigidly connected to the rear frame part 28 and the shaft sections 53a, 53b, being part of a single shaft 53, are rigidly connected to the front frame part 26. The form and positioning of the elastic element 45, the shaft or shaft section 53a or 53b, and the support element with respect to each other determine the constraint experienced by the corresponding elastic element. Therefore, by selecting the geometric configuration of these parts, the torque exerted by an elasticity assembly at a given tilt angle can be adjusted.

In the embodiment shown in Figs 5-7, the elastic element 45 of an elasticity module comprises four tubular rods, preferably made from an elastic material such as rubber. As can best seen in **Figure 7**, stabilizer or insert 48 having a hollow part defining a channel 55 with square cross section is rotationally fixed within and with respect to bushing 51a. Each bushing 51a, 51b comprises rims 54 extending along the longitudinal direction on the inner side wall of the bushing. The rim matches and fits in longitudinal grooves 52 provided in the insert 48, thereby blocking the insert rotationally. The position of the rims 54 blocking the insert 48 determine the rotational orientation of the square of channel 55 as seen in Fig. 7, the square cross section preferably defining an entire passage within the insert 48. Thereby, the positions of the four elastic rods 45 within channel 55 are also defined, as they extend along the corners of the channel 55.

The insert 48 is provided for facilitating the assembling process, but could also be realized in a single piece with bushing 51a and may therefore be considered as part of bushing 51a. The bushing 51a (more generally, support 51a) and insert 48 are preferably rigid elements, for example made from rigid plastics and/or from metal, in particular steel or aluminium.

The shaft section 53a has a quadratic cross section and is arranged within a square tube 49, also having a square inner cross-section, suitable to fittingly house shaft section 53a, such that shaft 53 is rotationally fixed with respect to the square tube 49. For the purpose of the present invention, tube 49 facilitates the assembly of the tilting device and/or of the vehicle and may in principle also be realized as a single piece with the shaft 53. The tube 49, as shaft section 53a are preferably rigid elements, for example made from rigid plastics and/or from metal, in particular steel or aluminium.

It is noted here that rectangular and in particular square cross sections or inner channels are shown with respect to parts 48, 49 and 53, but other cross-sectional configurations may also be used. Polygonal cross-sections are preferred. Tube 49 may thus be more generally a polygonal tube, for example.

The four rods forming the elastic element 45 are provided in and along the corners of the longitudinal channel 55 provided by insert 48. At the same time, each rod lies upon the outer, flat surface of one of the four sides of the square tube 49. One can easily understand from Fig. 7 how the rotation of the shaft 53 (and tube 49) with respect to the insert 48 will put a constraint on the rods of the elastic element 45, tending the compression of the rods. The elastic element having elasticity, dampening and/or resiliency properties, in can be compressed and/or deformed while elastically opposing the rotational movement, resulting in the generation of torque. In a preferred embodiment, said torque is obtained from the reaction force exerted by a body (here: elastic element 45) with respect to another body (here shaft and/or tube 49) in accordance with Newton's third law of motion.

The bushings 51a, 51b may be provided in the form of one continuous bushing or tube, or two bushings that are in contact or nearly so. In Figs 3, 5 and 6, the bushings are shown as having a relatively large gap 56 (several centimetres) in between for the reason of improving illustration of the components within the bushing. Preferably, when completely assembled, the shaft 53 is not exposed as seen in Figs 3 and 5 but covered. In case the bushings 51a, 51b are different sections of a continuous bushing, they may also be referred to as bushing sections 51a and 51b, for example covering both shaft sections 53a, 53b. In this case, the inserts 48 of each bushing section 51a, 51b may be designed to determine the desired pre-constrained, by the rotational position of the inner channel 55, which may thus be different for bushing section 51a compared to the insert for bushing section 51b. For assembling, the inserts 48 (as well as the rods of the elastic element 45 and the inner tube 49) may be inserted through the two openings at the opposed ends of the continuous tube with bushing sections 51a, 51b.

In contrast, if the bushings 51a, 51b are provided in the form of separate pieces, both fixed to the rear frame 28, the gap 56 (Fig. 6) between them is preferably relatively small (e.g. 0-10mm) and/or covered by a cover, so as to cover the inner components such as the shaft 53.

With the vehicle in (preferably: zero tilting angle) rest position, as shown in Fig. 3, the elasticity modules are preferably in a pre-constrained state, as described elsewhere in this specification. In order to obtain this configuration, the mounting of the first and second portions 11, 12 of the vehicle shown needs to be taken into consideration. In particular, the elasticity assemblies 41, 42 of the embodiment shown in Figs 4-6 need to be fixed to the rear frame 28 taking into account the desired pre-constraints (and consequently, the amounts and directions of torques exerted) at the rest position. In the embodiment shown, the rotational position of the bushings 51a, 51b and in particular the rotational positions of the channel 55 (Fig. 7) of insert 48 with respect to the symmetry plane needs to be adjusted depending on the desired pre-constraint. It is also possible to select the rotational position of the rims 54 of the bushing when fixing the bushing to the rear frame part 28. The arrangement of these structural elements may be chosen so as to obtain a desired pre-constraint at a particular tilt angle, such as at zero tilt angle. In Figure 7, the vertical plane 550 and the first elasticity module 41 as fixed to the rear frame part 28 are shown. In this figure, the elastic elements 45 are shown free from constraint and the channel 55 is shown to be rotated by an angle corresponding to the absolute amount of α_{N}. In this embodiment, the channel 55 and the elastic elements 45 define the rotational position of the square-section tube 49, thereby the rotational position of the shaft section 53a and thus the tilt angle of the front frame part when there is no constraint on the first elasticity module.

Furthermore, the process of assembling the first and second portions needs to be conducted in a manner that is appropriate to obtain the desired torques and/or pre-constraints at a zero tilt angle position. To this end, the rear frame 28 may contain an opening 64 for inserting the front end 57 of the shaft 53 first into the first elasticity module 41, thereby engaging the shaft section, elastic element and the support element of the first elasticity module. With the shaft thus being inserted in the first elasticity module, but not yet in the second one, the second shaft section 53b is approximately located at the longitudinal level of the (tube 49 of the) first elasticity module 41, while the first shaft section 53a is still largely outside the first elasticity module. The shaft 53 is thus partly inserted, above half way of its fully assembled position. At this stage, the entire front frame 26 is preferably rotated with respect to the rear frame 28 to put a pre-constraint on the first elasticity module. In accordance with an embodiment, a rotation of 2xα_{N1} is conducted. Preferably, the second elasticity module has been mounted with respect to the first one in such a manner that, after said rotation, it is aligned with the shaft, so as to allow insertion of the front end 57 into the second elasticity assembly and until to its final longitudinal position as shown in Fig. 6, thereby engaging the shaft section, the support element and the elastic element of the second elasticity module. Now the constraint of the first frame part relative to the second frame part is released. The first and second elasticity modules preferably have substantially identical components when considered alone, so as to exhibit preferably the same torque characteristics for a given rotational angle with respect to the unconstrained, neutral position. This being the case, once the constraint on the first frame part and the first elasticity module being released, the second elasticity module will be subjected to the torque imposed by the first elasticity module, and it will start exerting torque on the shaft until the first and second elasticity modules are "equilibrated" in that they both exert the same amount of torque but in opposite rotational directions. At this position, the two torque values of the first and second elasticity modules cancelling each other out. As indicated above, the elasticity modules, and in particular support elements 51a, 51b, have been rigidly fixed in such a manner to the rear frame 28 that the position of neutralizing torques coincides with the zero tilting angle position of the vehicle. In this position, both elasticity modules are preferably in a pre-constrained status and both exert torque towards the rest position of the vehicle, in accordance with preferred embodiments of the invention. Once the frame parts 26, 28 are rotationally mounted with the elasticity modules in pre-constrained state, the first and second frame parts can be secured to block the axial displacement of the first and second frame parts, thereby securing the rotational connection.

Figs 4-6 illustrate an embodiment where a single shaft 53 comprising two co-axial shaft sections 53a, 53b is rigidly connected to the front frame 26, and the support elements 51a, 51b of first and second elasticity modules are rigidly connected to the rear frame part 28. Other configurations are also possible and encompassed by the invention. For example, in an inversed configuration (not shown), the two support elements 51a, 51b may be connected to the front frame 26 and the shaft 53 with sections 53a, 53b may be connected to the rear frame part.

In a more generally formulated embodiment, for each of two elasticity modules, one selected from said support element 51a, 51b and said shaft (or shaft section) 53a, 53b is rigidly connected to said first portion 11 (preferably the front frame part 26) and the respective other of said shaft (or shaft section) and support element (of that elasticity module) is rigidly connected to the second portions (preferably to the rear frame part 28). In case of two elasticity modules, this results in three possible configurations, where both support elements are either on the front or the rear frame parts (and the shaft sections on the respective other frame part), or each frame part is rigidly connected to one shaft and one support element.

**Figure 8** illustrates an embodiment where the support element 51a of a first elasticity module 41 is rigidly connected with the rear frame part 28, and the support element 51b of a second elasticity module 42 is rigidly connected with a front frame part 26. Furthermore, a first shaft section 53a is rigidly connected to said front frame part 26, and a second shaft section 53b is rigidly connected to said rear frame part 28. In this embodiment, the shaft is preferably separated in two shaft sections 53a, 53b, which are physically separate shafts, which may rotate one independently from the other. Preferably, the shaft sections 53a, 53b are coaxial and configured to extend along the same tilting axis 35.

In the embodiment shown in Fig. 8, a third ball bearing 63 is preferably provided as part of the overall connection assembly 30. It is also noted that the rear frame part 28 comprises a symmetrically disposed pair of left and right rigid extensions 28b, only the right one of which is visible in the longitudinal section view of Fig. 8. The role of the rigid extensions 28b is to stabilize the second shaft section 53b placed in the second elasticity module 42. The extensions 28b are preferably rigidly connected, for example welded, to the main body 28a of the rear frame part.

In the zero tilting angle position, the first and second elasticity modules 41, 42 shown in Fig. 8 are preferably in a pre-constrained state resulting in torques that preferably cancel each other out, as described with respect to the first embodiment.

The person skilled in the art will notice that during tilting of the first portion of the vehicle around tilting axis 35, the first shaft section 53a will rotate with respect to the first support element 51a, since the second portion keeps its angular position and the first support element 51a is rigidly connected to the rear frame part 28. On the other hand, the second shaft section 53b, being also rigidly connected with the rear frame part 28, does not rotate. Instead, the second support element 51b, being rigidly connected to the front frame part 26, will rotate around axis 35 and with respect to the second shaft section 53b. As this shows, in accordance with the present invention, rotation and/or pivoting of a shaft or shaft section with respect to (or relative to) a support element does not require the shaft to rotate with the support remaining rotationally fixed.

As with respect to the first embodiment of Figs 4-6, the overall assembly of the tilting device, comprising the connection assembly 30 and the elasticity modules 41, 42 is preferably adapted to have overall torques of the combined elasticity modules being cancelled out at a zero tilting angle position, with the two elasticity modules being in a pre-constrained state. This may be achieved by inserting the front end 57a of the first shaft 53a through opening 64a of the rear frame part 28a and into the first elasticity assembly. Without exerting any torque between the front and rear frame parts, the two parts will be tilted by angle the α_{N1} (+ or -, as the case may be) at this stage, defined by the neutral position of the first elasticity module 41. Now, the front frame part 26 is rotated with respect to the rear frame part 28 by first passing through the rest position and up to the position α_{N2}, with opposite sign to α_{N1} (- or +, depending on the configuration chosen), to the neutral position of the second elasticity module 42. At this stage, the first elasticity module is in a (relatively highly) constrained state, preferably exerting torque corresponding to a tilting angle with the absolute value of |α_{N2}| or 2 × |α_{N1} . Now, the free end 57b of the second shaft section 53b is inserted into support 51b of the second elasticity module 42, preferably through opening 64b. In the embodiment shown in Fig. 8, the second shaft section 51b is the stem of a T-shaped piece 58, with each of the two left and right branches of the T-piece being provided for connecting the piece to one of the two frame extensions 28b. With the second shaft section 53b being fully placed in the second support element 51b at angular position α_{N2}, the former is now rigidly connected with the rear frame part 28. In this embodiment, this is thus done by rigidly connecting each of the two branches of the T-piece 58 with one of the two frame extensions 28b. After this, the front frame part can be released, and will rotate back under the effect of the first and second elasticity modules. As the front frame part 26 rotates to the rest position, the (high) constraint of the first elasticity module 41 will gradually decrease while simultaneously gradually increasing the constraint (starting with zero) on the second elasticity module 42. Preferably, at the zero tilting angle position, the torques of the two elasticity modules cancel out each other.

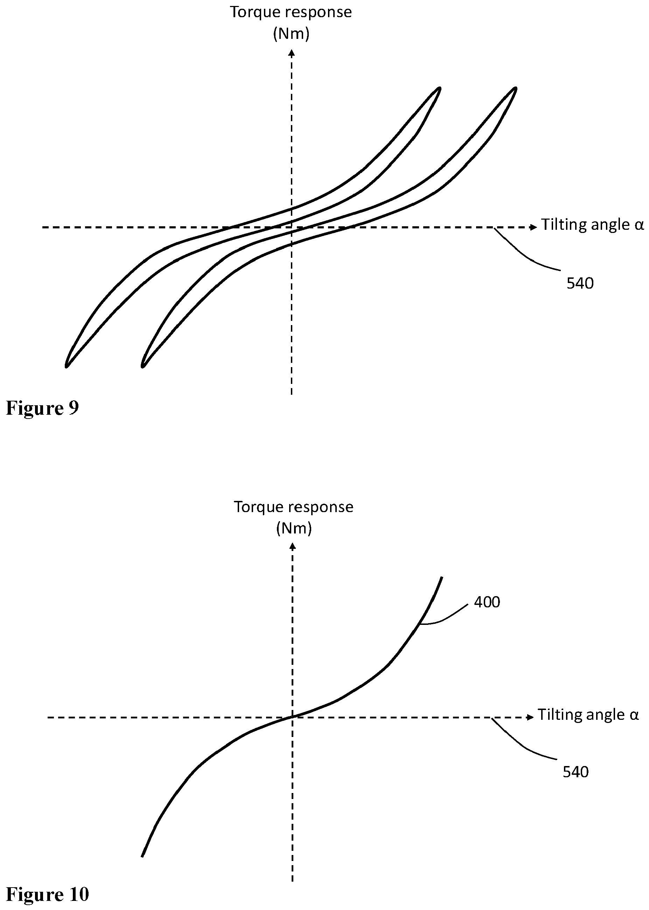

The graphs in **Figures 9** and **10** illustrate the torque as a function of tilting angle α in a vehicle according to a preferred embodiment of a vehicle of the invention, for example as shown in Figs 4-6 or 8. As shown in Fig. 9, the curves of each of the first and second elasticity modules, 42 still exhibit hysteresis when taken alone. However, they are both shifted, at identical absolute extents, to the left and right, respectively, on the x-coordinate. An approximation of the overall behaviour of the two elasticity modules is then shown as a single resulting curve in Fig. 10. Due to the configuration of the elasticity modules, the curve passes through the origin of the coordinate system, reflecting the absence of any resulting torque at the zero tilting angle position. Further, due to the pre-constraints imposed at the elasticity modules in the zero tilting angle position, tilting results in an immediate response in terms of torque response. Disadvantages observed in vehicles equipped with prior art tilting devices, such as the absence of a torque response at low tilting angles and the vibration of the front with respect to the rear portion when driving, especially at the zero tilting angle position, are effectively avoided. The overall stability and driving feeling of the entire vehicle are substantially improved.

It is noted that the embodiments shown in Figs 4-8 comprise two elasticity modules having substantially identical components so as to exert identical torques upon a given rotation. The invention encompasses that the first and second elasticity modules are different in that, taken individually, the exhibit different torque response curves, for example one elasticity module exhibiting a larger (or smaller) absolute torque response than the other elasticity module at a given tilting angle. In other words, tilting to one side would be easier than tilting to the other side. This may be desirable in vehicles in which the seat of the driver is not centred with respect to the left to right lateral extension of the vehicle. For example, supposing the driver seat being shifted to the left from the driver's perspective, it may be advantageous to have easier tilting to the left than two the right. It is preferred, however, that the elasticity modules are configured and fixed in such a manner that at the zero tilting angle position, the net torque is zero, and the rest position is thereby stabilized.

On the other hand, the invention does not exclude the possibility that the elasticity modules are configured to stabilize another position than the zero tilting angle position. In other words, the elasticity modules would stabilize a tilted position, where |α|>0. One may envisage such a configuration in vehicles that are supposed or assembled specifically for driving along a curve in a given (left *or* right) direction, for example conducting a circular movement always in the same direction.

As yet another example, the invention envisages driver/user adjustable pre-constraint of the first or the second and/or any elasticity module, resulting in the driver being able to determine the shape of the curves in Figs 9 and 10. For example, the driver may adjust the tilting angle that is stabilized by the elasticity modules and/or the steepness of the curve upon inducing tilt by the driver.

It is noted that several components or sub-assemblies of the vehicle, such as the first and second elasticity modules have been described as separate or separable entities. However, the two functionalities and effects exerted by the two modules may be integrated in a single assembly. For example, as mentioned previously, the two bushings 51a and 51b may be provided in the form of a continuous bushing tube, containing all components of the first and second elasticity modules. Furthermore, the connection assembly 30 may have been considered as a separate entity, but could also be considered as part of the elasticity modules. The elasticity modules and the connection assemblies preferably function together and form an overall assembly, which here is preferably referred to as the tilting (or tilt) control device.

The invention has been illustrated with reference of the tricycle as shown in the figures. As described elsewhere, the invention encompasses other types of vehicles, including four-wheeled vehicles. Furthermore, in the case of tricycles, it is possible to have the two-wheeled carrier portion in the front and the tilting portion comprising the passenger seat at the rear. Such vehicles may also be equipped with the tilting device in accordance with the invention. In such configurations, the part described herein as a front frame part would more accurately be described as a rear frame part, and the part described herein as the rear frame part would more accurately be described as the front frame part. For this reason, it is understood that the expressions "front frame part" and "rear frame part", or other expressions referring to the front and the rear parts or portions of the vehicle, may be replaced by "first frame portion" and "second frame portion", or any other expression that does not imply any relative position along the rear to front direction of the vehicle.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A wheeled vehicle (10) comprising:
- a first portion (11) and a second portion (12), each of said first and second portions comprising one or more wheels (21-23),
- a connection assembly (30) providing a pivotable connection between said first and second portions and enabling tilting of said first portion relative to said second portion, or vice versa, with respect to a rotation axis (35),
- first and second elasticity modules (41, 42) provided to exert a torque between said first and second portions depending on a tilting angle (α) of said first portion relative to said second portion,
wherein said vehicle presents a zero tilting angle position at least when there is absence of tilting and/or when the first and second portions are in a configuration allowing the vehicle to advance along a straight line on a horizontal surface, and,
wherein, said first and second elasticity modules both are provided to exert a torque in opposite directions that is different from zero at said zero tilting angle position.

2. The vehicle according to claim 1, wherein said first and second torques exerted by said first and second elasticity modules substantially cancel out each other at said zero tilting angle position.

3. The vehicle according to any one of the preceding claims, wherein said first and second elasticity modules (41, 42) present a neutral angular position between said first and second portions when they do not exert any torque, wherein said neutral angular position is at a tilt angle (±α) in the range of ± 0.5° to 179°, preferably ±1° to 60°.

4. The vehicle according to any one of the preceding claims, wherein each of said first and second elasticity modules (41, 42) comprises a shaft or shaft section (53, 53a, 53b) and an elastic and/or resilient element (45) provided to exert force on said shaft or shaft section upon physical constraint experienced by said elastic and/or resilient element (45), said physical constraint preferably resulting in torque between said first and second portions, said torque preferably depending on an angular position between said support element (51a) and said shaft (or shaft section) (51b) with respect to the axis of said shaft.

5. The vehicle of claim 4, wherein each of said first and second elasticity modules (41, 42) further comprises a support element (51a, 51b), wherein said shaft or shaft section (53, 53a, 53b) is preferably pivotally mounted with respect to said support element.

6. The vehicle of claim 5, wherein, for each elasticity module, one selected from said support element (51a, 51b) and said shaft (or shaft section) (53, 53a, 53b) is rigidly connected to said first portion and the respective other of said shaft (or shaft section) and support element and is rigidly connected to the second portions.

7. The vehicle of any one of claims 4-6, wherein said elastic and/or resilient element (45) is provided with respect to said support element such that a physical constraint, preferably in the form of deformation of said elastic and/or resilient element (45), results in the generation of torque between said support element and said shaft.

8. The vehicle according to any one of the preceding claims, wherein said rear portion (12) is rigidly connected with first and second support elements (51a, 51b) of said first and second elasticity modules (41, 42), and wherein a shaft (53) is rigidly connected to said first portion (11).

9. The vehicle according to any one of the preceding claims, wherein said first portion (11) is rigidly connected with a first support element (51a) of the first elasticity module (41) and said second portion (12) is rigidly connected with a second support element (51b) of the second elasticity module, wherein a first shaft section (53a) is rigidly connected to said first portion, and a second shaft section (53b) is rigidly connected to said second portion (12).

10. The vehicle according to any one of claims 6-10, wherein said support element comprises a bushing and said shaft or shaft section extends at least partially through said bushing.

11. The vehicle according to any one of the preceding claims, wherein said connection assembly (30) comprises one or more bearings (61, 62, 63) for rotationally connecting a shaft or shaft section (53, 53a, 53b) of said first or second portion section (11, 12) with a frame portion or the support element (51b, 51a) of the respective other, second or first portion (12, 11).

12. The vehicle according to any one of the preceding claims, which is an electrical vehicle, comprising one or more electricity driven motors for propelling the vehicle.

13. The vehicle according to any one of the preceding claims, which is selected from the group consisting of: a tricycle, a bicycle, a mopet and a motorbike.

14. An angular rotation and/or tilting control device comprising:
- a connection assembly (30) providing a pivotable connection between first and second portions and enabling rotation between said first portion relative to said second portion, or vice versa, with respect to a rotation axis (35),
- first and second elasticity modules (41, 42) provided to exert a torque between said first and second portions depending on a rotational angle (α) of said first portion relative to said second portion.

15. A method for assembling a first frame part (26) and a second frame part (28) of a wheeled vehicle comprising a tilting device for enabling tilting of a first portions of the vehicle with respect to a second portion of the vehicle, wherein said tilting device comprises one or more elasticity modules, the method comprising rotationally connecting said first and second frame parts such that at least one of said and second elasticity modules is in a pre-constrained state with said first and second frame parts being connected.
